# EUROPEAN PATENT SPECIFICATION

(11) **EP 2 786 969 B1**
(45) Date of publication and mention of the grant of the patent: **05.05.2021**
(21) Application number: 12853976.4
(22) Date of filing: 30.11.2012
(51) Int. Cl.: C01G 23/04, C01D 15/02, B01J 6/00, H01M 10/052

(54) **PREPARATION METHOD OF LITHIUM TITANIUM COMPOSITE OXIDE DOPED WITH DISSIMILAR METAL, AND LITHIUM TITANIUM COMPOSITE OXIDE DOPED WITH DISSIMILAR METAL PREPARED THEREBY**
VERFAHREN ZUR HERSTELLUNG VON LITHIUM-TITANMISCHOXID MIT ARTFREMDEN METALLEN UND DAMIT HERGESTELLTES LITHIUM-TITANMISCHOXID MIT ARTFREMDEN METALLEN
PROCÉDÉ DE PRÉPARATION D'UN OXYDE COMPOSITE DE LITHIUM ET DE TITANE DOPÉ PAR UN MÉTAL DISSIMILAIRE, ET OXYDE COMPOSITE À BASE DE LITHIUM ET DE TITANE DOPÉ PAR UN MÉTAL DE NATURE DIFFÉRENTE PRÉPARÉ PAR CE PROCÉDÉ

(30) Priority: 30.11.2011 KR 20110126832; 18.06.2012 KR 20120065066
(43) Date of publication of application: 08.10.2014
(73) Proprietor: Posco Chemical Co., Ltd, Sinhang-ro, Nam-gu Pohang-si, Gyeongsangbuk-do (KR); POSCO, Donghaean-ro, Nam-gu, Pohang-si Gyeongsangbuk-do 790-300 (KR); Research Institute of Industrial Science & Technology, Gyeongsangbuk-do 790-330 (KR)
(72) Inventor: CHOI, Su-Bong, Chungju-si Chungcheongbuk-do 380-110 (KR); CHOI, Jun-Hwa, Gumi-si Gyeongsangbuk-do 730-936 (KR); KO, Hyung-Shin, Gumi-si Gyeongsangbuk-do 730-764 (KR); LEE, Jae-An, Gumi-si Gyeongsangbuk-do 730-764 (KR)
(74) Representative: J A Kemp LLP
(86) International application number: PCT/KR2012/010317
(87) International publication number: WO 2013/081418

(56) References cited:
- JP-A- 2001 146 426
- KR-A- 20080 042 737
- KR-A- 20100 136 805
- KR-A- 20110 114 392
- US-A1- 2011 189 545

## Description

### [Technical Field]

The present invention relates to a preparation method of a lithium titanium composite oxide doped with a dissimilar metal, and a lithium titanium composite oxide doped with a dissimilar metal, and more particularly, relates to a preparation method of a lithium titanium composite oxide doped with a dissimilar metal capable of finely controlling sizes of primary particles, by mixing a dissimilar metal, grinding, and spray-drying, and a lithium titanium composite oxide doped with a dissimilar metal.

### [Background Art]

A non-aqueous electrolyte battery charged and discharged by moving lithium ions between a negative electrode and a positive electrode has been actively studied as a high energy density battery. In recent years, a lithium titanium composite oxide having a high Li intercalate and deintercalate potential has attracted attention. In principle, lithium metal is not precipitated in the lithium titanium composite oxide at a Li intercalate and deintercalate potential, and, thus, the lithium titanium composite oxide has the advantage of quick charging or excellent performance at a low temperature.

Such a lithium titanium composite oxide includes a spinel structure lithium titanate expressed by a general formula Li(₁₊ₓ)Ti(₂₋ₓ)O_{y}(x = -0.2 to 1.0, y = 3 to 4), and representative examples thereof include Li_{4/3}Ti_{5/3}O₄, LiTi₂O₄, and Li₂TiO₃. These materials have been conventionally used as cathode materials and can also be used as anode materials. Thus, they have been expected to be used at the same time as cathode active materials and anode active materials of batteries in the future. These materials have a voltage of 1.5 V based on lithium and have a long cycle life. Further, since contraction and expansion that occurs during charge-discharge cycle is negligible, these materials have attracted attention for enlargement of a battery. In particular, the spinel structure lithium titanate (empirical formula Li₄₊ₓTi₅O₁₂ (0≤x≤3)) has a small volume change during charge-discharge cycle and is reversibly excellent, and, thus, it has attracted attention.

However, the spinel structure lithium titanate has a theoretical capacity of 175 mAh/g, and, thus, it has a limitation on a high capacity. Further, a part of the spinel structure lithium titanate is phase-separated to rutile TiO₂(r-TiO₂) during a preparation process. The rutile TiO₂(r-TiO₂) has a rock-salt structure with electrochemical activity but has a low response speed and an inclined potential curve and also has a small capacity, which thus reduces an effective capacity of a lithium titanium composite oxide to be obtained.

US 2011/0189545 describes a process for the preparation of a lithium titanium spinel and its use. KR 2011 0114392 describes the preparation of a lithium titanium composite oxide comprising carbon.

### [Disclosure]

### [Technical Problem]

In order to solve the above-described problems of the conventional technologies, an object of the present invention is to provide a preparation method of a lithium titanium composite oxide doped with a dissimilar metal which is capable of suppressing rutile titanium dioxide generation by spray-drying after doping a dissimilar metal and is improved in an initial capacity and a rate capability by primary particles sizes controlling, and a lithium titanium composite oxide doped with a dissimilar metal.

### [Technical Solution]

In order to achieve the above objects, an exemplary embodiment of the present invention provides a preparation method of a lithium titanium composite oxide doped with a dissimilar metal, the preparation method including the following steps:
i) mixing a lithium-containing compound, a titanium oxide, and a dissimilar metal-containing compound at a stoichiometric ratio in a solid state;
ii) preparing slurry by dispersing the solid-state mixture of the step i) in a solvent and wet grinding the solid-state mixture until an average particle diameter come to be 0.3 µm to 0.8 µm ;
iii) spray-drying the slurry of the step ii);
iv) calcining the spray-dried slurry; and
v) grinding the particles calcined in the step iv) to obtain the lithium titanium composite oxide doped with a dissimilar metal; and
wherein: the dissimilar metal is Na or Zr and the ground particles obtained in step v) have a D50 in a range of 0.7 µm to 1.5 µm.

In the preparation method of a lithium titanium composite oxide doped with a dissimilar metal of the present invention, a Na-containing compound as the dissimilar metal may be a sodium carbonate, a sodium hydroxide, or a mixture of the sodium carbonate and the sodium hydroxide, and a Zr-containing compound may be Zr(OH)₄, ZrO₂, or a mixture thereof.

In the preparation method of a lithium titanium composite oxide doped with a dissimilar metal of the present invention, the titanium oxide is an anatase type or a hydrous titanium oxide.

In the preparation method of a lithium titanium composite oxide doped with a dissimilar metal of the present invention, the lithium-containing compound may be a lithium hydroxide or a lithium carbonate.

In the preparation method of a lithium titanium composite oxide doped with a dissimilar metal of the present invention, the wet grinding in the step ii) may be carried out using water as a solvent and zirconia beads at 2000 to 4000 rpm.

In the preparation method of a lithium titanium composite oxide doped with a dissimilar metal of the present invention, the spray-drying the slurry in the step iii) may be carried out under condition that input hot air temperature is in a range of 250 to 300°C and exhausted hot air temperature is in a range 100 to 150°C.

In the preparation method of a lithium titanium composite oxide doped with a dissimilar metal of the present invention, the calcining in the step iv) may be carried out by calcining the spray-dried slurry of the step iii) under an air atmosphere at 700 to 800°C for 5 hours to 10 hours.

The present invention also provides a lithium titanium composite oxide doped with a dissimilar metal. The lithium titanium composite oxide doped with a dissimilar metal is comprised of secondary particles formed by agglomeration of primary particles, wherein: diameters of the primary particles are in a range of 0.2 µm to 0.6 µm and diameters of the secondary particles are in a range of 5 µm to 25 µm; the dissimilar metal is Na or Zr; and the secondary particles are ground to have D₅₀ in a range of 0.7 µm to 1.5 µm.

In the preparation method of a lithium titanium composite oxide doped with a dissimilar metal of the present invention, the calcined particles may be ground by a dry grinding method.

Related to the present invention are particles prepared and ground by dry grinding method. According to the present invention, in the particles, binding between the primary particles may be weakened by dry grinding and thus the primary particles may be separated, and the ground particles may have sizes D₅₀ in a range of 0.7 µm to 1.5 µm.

In the present invention, the dry grinding method for grinding the lithium titanium composite oxide is not specifically limited. However, to be specific, it is desirable to use a jet air mill in order to grind the particles formed after the calcination to a micrometer size.

The lithium titanium composite oxide doped with a dissimilar metal may be doped with the dissimilar metal in an amount of more than 0 wt.% to 5 wt.% or less.

The lithium titanium composite oxide doped with a dissimilar metal of the present invention may be a spinel structure.

In the lithium titanium composite oxide doped with a dissimilar metal of the present invention, a main peak intensity of a rutile titanium dioxide detected at 2θ in a range of 25° to 30° may be 0.5 or less.

The present invention also provides a cathode using the lithium titanium composite oxide doped with a dissimilar metal of the present invention as a cathode active material or an anode using the lithium titanium composite oxide doped with a dissimilar metal of the present invention as an anode active material.

Furthermore, the present invention provides a lithium rechargeable battery containing a cathode using the lithium titanium composite oxide doped with a dissimilar metal of the present invention as a cathode active material or a lithium rechargeable battery containing an anode using the lithium titanium composite oxide doped with a dissimilar metal of the present invention as an anode active material.

Hereinafter, the present invention will be explained in more detail.

According to the preparation method of the present invention, a lithium titanium composite oxide which is capable of finely controlling primary particles diameters may be prepared by mixing a lithium compound, a titanium compound, and a dissimilar metal as a raw material at the same time by solidstate mixing, wet grinding, spray-drying and calcining.

A titanium oxide-containing compound used as a starting material may be any one of sulphates or organic salts. However, preferably, a crystal structure of the titanium oxide-containing compound used as a starting material to prepare a lithium titanium composite oxide having an excellent charge/discharge capacity or battery property as described in the present invention may employ an anatase titanium dioxide or a hydrous titanium oxide.

The anatase titanium dioxide needs to have a purity of 95% or more, and preferably 98% or more. If the purity is less than 95%, a capacity per weight of an active materialmay undesirably decrease. An anatase titanium dioxide having a high purity, for example, 99.99% or more, may be used, but in this case, the cost may become high. From the point of an electrode , if the purity is 98% or more, an effect of particle diameter and shape is greater than an effect of purification degree. The hydrous titanium oxide needs to have a purity of 90% or more before calcination to obtain an anatase titanium dioxide having a purity in the above-described range after calcination for the same reason applied to the anatase titanium dioxide.

In the preparation method of the present invention, the lithium compound used as a starting material may include lithium salts such as a lithium hydroxide, a lithium hydroxide monohydrate, a lithium oxide, a lithium hydrogen carbonate, or a lithium carbonate.

In the preparation method of the present invention, the dissimilar metal used for doping is Na or Zr. Preferably, the compound containing Na may be a sodium hydroxide, a sodium carbonate, or a mixture thereof. Preferably, the compound containing Zr may be Zr(OH)₄, ZrO₂, or a mixture thereof.

According to the present invention, the dissimilar metal in the lithium titanium composite oxide may be used for doping in an amount of more than 0 wt.% to 5 wt.% or less. When a doping metal amount is 0 wt.%, an effect of battery safe improvement caused by a dissimilar metal doping may become insignificant. When a doping metal amount is more than 5 wt.%, a conductivity may be decreased, which may cause deterioration in general performance of the battery.

In the preparation method of a lithium titanium composite oxide according to the present invention, a lithium compound, a titanium compound, and a doping metal as starting materials may be mixed at a stoichiometric ratio, slurry prepared by dispersing the solid-state mixture in a liquid medium and wet grinding the mixture may be spray dryed and then calcined by a commonly known method, so that agglomerated powder formed of secondary particles by agglomeration of primary particles can be used.

In the preparation method of the present invention, preferably, the mixture of the lithium compound, the titanium compound, and the doping metal may be dispersed in a dispersion medium and then wet ground using a medium-stirring grinder or the like. Various organic solvents and aqueous solvents may be used as the dispersion medium used for wet grinding of the slurry,, and preferably, water may be used. Preferably, a ratio of the total weight of the material compounds with respect to the total weight of the slurry may be50 wt.% or more and 60 wt.% or less. If a weight ratio is less than the above described range, a concentration of the slurry may be extremely rarefied, and, thus, spherical particles formed after spray-drying may become smaller than necessary or may be damaged. If this weight ratio is more than the above-described range, it may be difficult to maintain homogeneity of the slurry.

Preferably, solids in the slurry may be wet grinding at 2000 to 4000 rpm so as to have an average particle diameter D₅₀ of 0.3 µm to 0.8 µm. If an average particle diameter of the solids in the slurry is too great, reactivity during calcination may be decreased and sphericity may be also decreased, so that a final powder charge density tends to be decreased. However, grinding the solids to be smaller than necessary may bring an increase of cost. Thus, typically, the solids may be wet grinding until an average particle diameter thereof is in a range of 0.3 µm to 0.8 µm.

By spray-drying of the lithium titanium composite oxide of the present invention, primary particles agglomerate to form secondary particles, and diameter of the primary particles may be in a range of 0.3 µm to 0.7 µm, and diameters of the secondary particles may be in a range of 5 µm to 25 µm.

A means for spray-drying is of no particular importance and is not limited to pressurizing a nozzle having a specified hole size. Actually, a certain commonly known spray-drying device may be used. A spray-drying deviceis generally classified into a rotary disc type and a nozzle type, and the nozzle type is classified into a pressure nozzle and a two-fluid nozzle. In addition, all of means commonly known in the art such as a rotary sprayer, a pressure nozzle, an air-type nozzle, and a sonic nozzle can be used. A flow rate, a viscosity of feed, a desired particle size of a spray-dried product, a dispersion liquid, and a droplet size of water-in-oil emulsion or water-in-oil microemulsion are factors to be typically considered when a means for spraying is selected.

In the step iii), spray-drying the slurry of the step ii), preferably, the spray-drying may be carried out under condition that input hot air temperature is in a range of 250 to 300°C and a exhausted hot air temperature is in a range 100 to 150°C to improve a shape, size, and crystallinity of particles.

Then, the mixed powder obtained as such is calcined. A calcination temperature may vary depending on the kind of the lithium compound, the titanium compound, the dissimilar metal and the other metal compound used as raw materials. For example, the calcination temperature may be typically 600°C or more and preferably 700°C or more, and typically 900°C or less and preferably 800°C or less. In this case, a calcination condition depends on a composition of the materials. However, if a calcination temperature is too high, the primary particles may be excessively grown, whereas if a calcination temperature is low, a volume density may be decreased and a specific surface area may be excessively increased.

A calcination time varied depending on a temperature, in the above-described temperature range, the calcination time may be typically 30 minutes or more and preferably 5 hours or more, and typically 20 hours or less and preferably 10 hours or less. If a calcination time is too short, it may be difficult to obtain lithium titanium composite oxide powder having a good crystallinity, and if it is too long, it may not be very practical. If a calcination time is too long, additional pulverization may be needed or pulverization may be difficult to carry out thereafter. Thus, preferably, a calcination time may be 10 hours or less.

The calcination may be carried out under an air atmosphere and may be carried out under an inert gas atmosphere such as nitrogen or argon depending on a composition of a compound used for preparation. Preferably, they may be used after being pressurized.

The preparation method of a lithium titanium composite oxide doped with a dissimilar metal of the present invention further includes the step: v) grinding the calcined particles. Preferably, the calcined particles may be ground by a dry grinding method, and the dry grinding method is not specifically limited. However, to be specific, it is desirable to use a jet air mill in order to grind the particles formed after the calcination to a micrometer size.

Related to the present invention are particles ground by the additional dry grinding step. According to the present invention, in the particles, binding between the primary particles may be weakened by dry grinding and thus the primary particles are separated, and, thus, the ground particles have sizes D₅₀ in a range of 0.7 µm to 1.5 µm.

Related to the present invention is a lithium titanium composite oxide doped with a dissimilar metal prepared by the preparation method of the present invention.

A composition of each component in the lithium titanium composite oxide doped with a dissimilar metal synthesized according to the present invention can be adjusted by an input ratio of each compound at the time of mixing, that is, a mixing ratio. Further, a particle size distribution, a BET specific surface area, a tap density, and a green density as properties of powder can be adjusted by a mixing method and an oxidation treatment.

The lithium titanium composite oxide doped with a dissimilar metal of the present invention comprises secondary particles formed by agglomeration of primary particles, and diameters of the primary particles may be in a range of 0.3 µm to 0.7 µm.

The lithium titanium composite oxide doped with a dissimilar metal prepared by the preparation method of the present invention may have a spinel structure. In particular, in the lithium titanium composite oxide doped with a dissimilar metal prepared by the preparation method of the present invention, a peak intensity of a rutile titanium dioxide detected at 2θ in a range of 25° to 30° may be 0 to 0.5. The rutile titanium dioxide may have a main peak at 2θ = 27.4°. In the lithium titanium composite oxide doped with a dissimilar metal prepared by the preparation method of the present invention, the rutile titanium dioxide which reduces a battery capacity as impurities may have a main peak intensity of 0 to 0.5, that is the amount of rutile titanium dioxide contained may bevery small, thereby increasing crystallinity and increasing a battery capacity.

The lithium titanium composite oxide doped with a metal of the present invention may be doped with a dissimilar metal, so that sizes of primary particles can be finely controllable as compared with a conventional lithium titanium composite oxide. Thus, it is possible to provide a battery having high initial charge-discharge efficiency and a high rate capability.

Related to the present invention are lithium titanium composite oxide particles doped with a dissimilar metal and ground by a dry grinding step after calcination. In the ground lithium titanium composite oxide particles doped with a dissimilar metal, binding between the primary particles may be weakened by dry grinding and the particles are ground so as to have D₅₀ in a range of 0.7 µm to 1.5 µm.

According to a preparation method of a lithium titanium composite oxide doped with a dissimilar metal, the preparation method and a lithium titanium composite oxide doped with a dissimilar metal prepared by the preparation method of the present invention, a dissimilar metal is mixed as a raw material, ground, and spray-dried, so that the dissimilar metal can be doped on a surface of the lithium titanium composite oxide at the same time when sizes of primary particles can be finely controlled as compared with a conventional lithium titanium composite oxide. Thus, it is possible to provide a battery having high initial charge-discharge efficiency and a high rate capability.

### [Description of Drawings]

FIG. 1 provides SEM images of a lithium titanium composite oxide doped with Na prepared in Preparation Example 1 of the present invention and a lithium titanium composite oxide of a comparative example.
FIG. 2 illustrates a result of measurement of diameters of primary particles from the SEM images of the lithium titanium composite oxide doped with Na prepared in Preparation Example 1 of the present invention.
FIG. 3 provides an XRD image of the lithium titanium composite oxide doped with Na prepared in Preparation Example 1 of the present invention and the lithium titanium composite oxide of the comparative example.
FIG. 4 illustrates a result of measurement of initial charge-discharge characteristic at 0.1 C of respective test cells containing the lithium titanium composite oxide prepared in Preparation Example 1 of the present invention and the lithium titanium composite oxide of the comparative example.
FIG. 5 illustrates a result of a charge-discharge test at a current density of 0.2 mA/cm² in a range of 0.1 C to 5 C in a test cell containing the lithium titanium composite oxide prepared in Preparation Example 1 of the present invention and a test cell containing the lithium titanium composite oxide of the comparative example.
FIG. 6 provides SEM images of a lithium titanium composite oxide doped with Zr prepared in Preparation Example 2 of the present invention and the lithium titanium composite oxide of the comparative example.
FIG. 7 provides an XRD image of the lithium titanium composite oxide doped with Zr prepared in Preparation Example 2 of the present invention and the lithium titanium composite oxide of the comparative example.
FIG. 8 illustrates a result of measurement of initial charge-discharge characteristic at 0.1 C of respective test cells containing the lithium titanium composite oxide doped with Zr prepared in Preparation Example 2 of the present invention and the lithium titanium composite oxide of the comparative example.
FIG. 9 and FIG. 10 illustrate a result of a charge-discharge test at a current density of 0.2 mA/cm² in a range of 0.1 C to 5 C in a test cell containing the lithium titanium composite oxide prepared in Preparation Example 2 of the present invention and a test cell containing the lithium titanium composite oxide of the comparative example.

### [Best Mode]

Hereinafter, the present invention will be explained in more detail with reference to examples.

### <Preparation Example 1> Preparation of lithium titanium composite oxide doped with Na as dissimilar metal

As starting materials, 1 M of a lithium hydroxide, 1 M of an anatase titanium oxide, and 1 M of a mixture of a sodium carbonate and a sodium hydroxide were e mixed in a solid state and dissolved in water with stirring.

The resultant product was wet ground at 3000 rpm using zirconia beads, and then spray-dried at a hot air temperature of 270°C and a temperature of exhausted hot air of 120°C and heat-treated under an oxygen atmosphere at 700°C for 10 hours. Thus, a lithium titanium composite oxide doped with Na as a dissimilar metal was prepared.

### <Preparation Example 2> Preparation of lithium titanium composite oxide doped with Zr as dissimilar metal

As starting materials, 1 M of a lithium hydroxide, 1 M of an anatase titanium oxide, and 1 M of a zirconium hydroxide were mixed in solid-state and dissolved in water with stirring.

The resultant product was wet ground at 3000 rpm using zirconia beads, and then spray-dried at a hot air temperature of 270°C and a temperature of exhausted hot air of 120°C and heat-treated under an oxygen atmosphere at 700°C for 10 hours. Thus, a lithium titanium composite oxide doped with Zr as a dissimilar metal was prepared.

### <Comparative Example>

A lithium titanium composite oxide was prepared in the same manner as Preparation Examples 1 and 2 except that only 1 M of a lithium hydroxide and 1 M of an anatase titanium oxide were used as starting materials and a sodium carbonate or a zirconium hydroxide for doping a dissimilar metal was not added.

### <Experimental Example 1> Measurement of SEM image

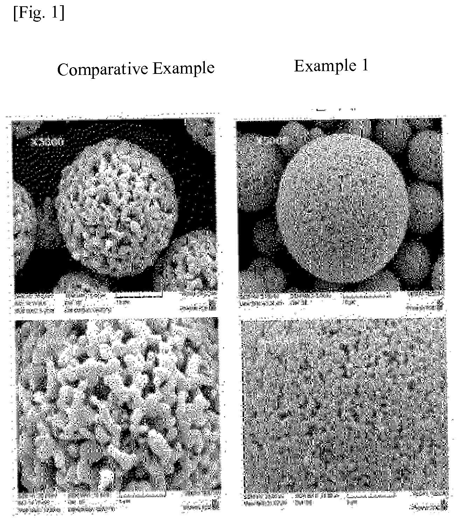

From SEM images and enlarged SEM images of the lithium titanium composite oxides respectively doped with Na and Zr as a dissimilar metal prepared in Preparation Examples 1 and 2 and the lithium titanium composite oxide, diameters of primary particles were measured. The results were illustrated in FIG. 1, FIG. 2, and FIG. 6.

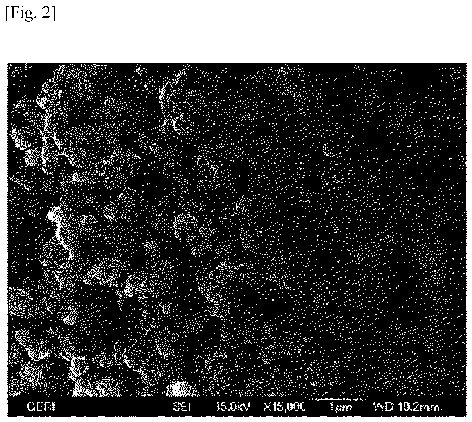

Referring to FIG. 1 and FIG. 2, it could be observed that the lithium titanium composite oxide doped with Na as a dissimilar metal according to Preparation Example 1 of the present invention was comprised of secondary particles formed by agglomeration of primary particles, and the primary particles had spherical shapes having diameters in a range of 0.3 µm to 0.7 µm.

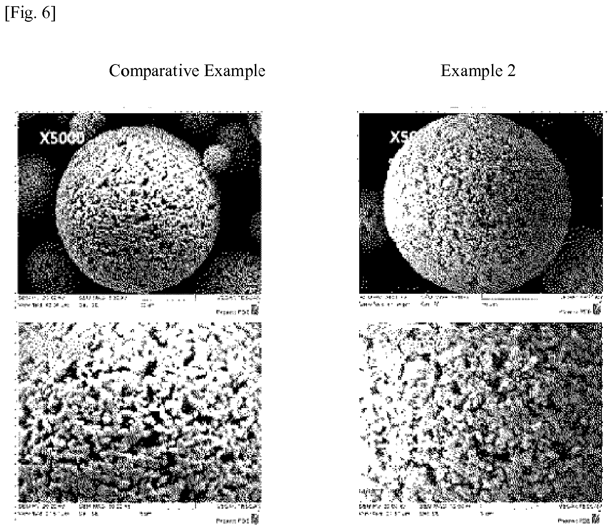

Referring to FIG. 1 and FIG. 6, it could be seen that in the lithium titanium composite oxides doped with a dissimilar metal (Na and Zr) prepared in Preparation Examples 1 and 2, diameters of the primary particles were finely controlled and pores were greatly reduced when the secondary particles were formed, as compared with the lithium titanium composite oxide of the comparative example.

### <Experimental Example 2> Measurement of XRD

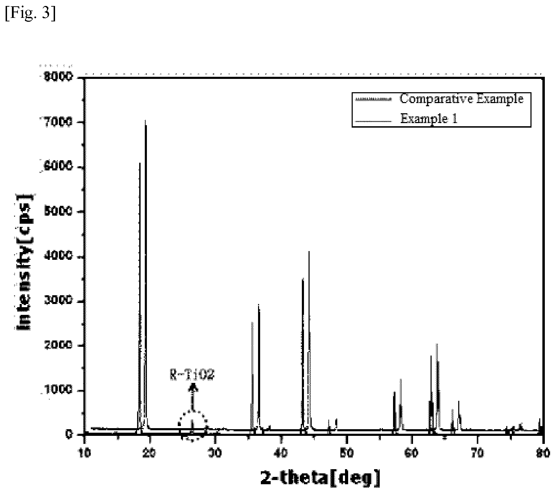

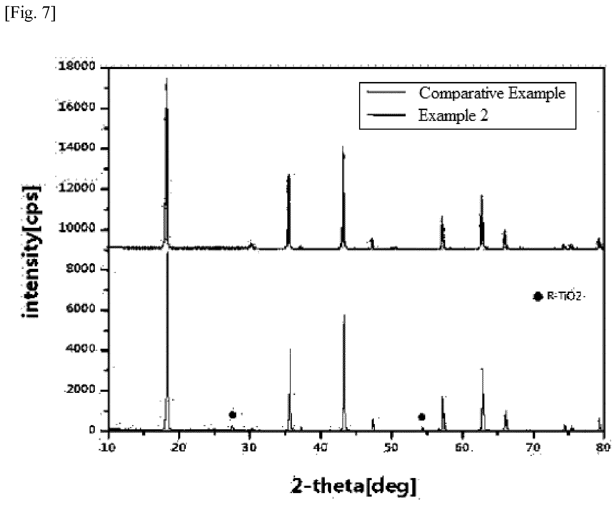

FIG. 3 and FIG. 7 illustrate XRD images of the lithium titanium composite oxides respectively doped with Na and Zr as a dissimilar metal prepared in Preparation Examples 1 and 2 and the lithium titanium composite oxide of the comparative example.

It can be seen from FIG. 3 and FIG. 7 that the lithium titanium composite oxides respectively doped with Na and Zr as a dissimilar metal according to Examples of the present invention have a spinel structure. Further, it can be seen that in the case of the lithium titanium composite oxides respectively doped with Na and Zr as a dissimilar metal according to Examples of the present invention, any peak of a rutile titanium dioxide was not observed. It can be seen that this is because Na and Zr added for doping react with the rutile titanium dioxide, thereby improving performance of a battery.

### <Preparation Example 3> Preparation of coin battery

A coin battery was prepared by a typically known preparation process using the lithium titanium composite oxides respectively doped with Na and Zr as a dissimilar metal according to Preparation Examples 1 and 2 as a cathode material, lithium foil as a counter electrode, a porous polyethylene film (produced by Celgard LLC, Celgard 2300, thickness: 25 µm) as a separator, and a liquid electrolyte in which LiPF₆ was dissolved at a concentration of 1 M in a solvent containing an ethylene carbonate and a dimethyl carbonate mixed at a volume ratio of 1:2. As for the comparative example, a coin battery was prepared in the same manner.

### <Experimental Example 3> Evaluation of initial charge-discharge characteristic

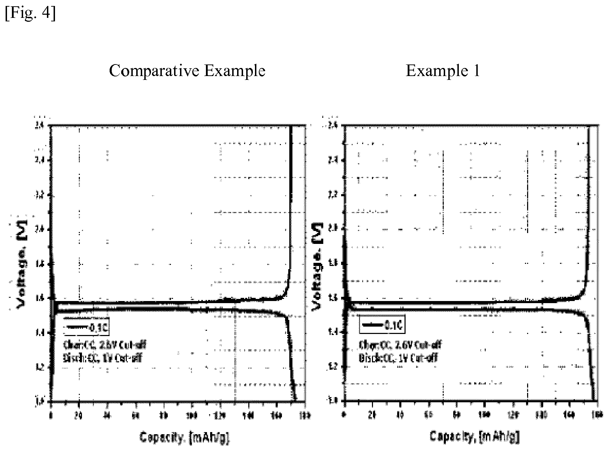

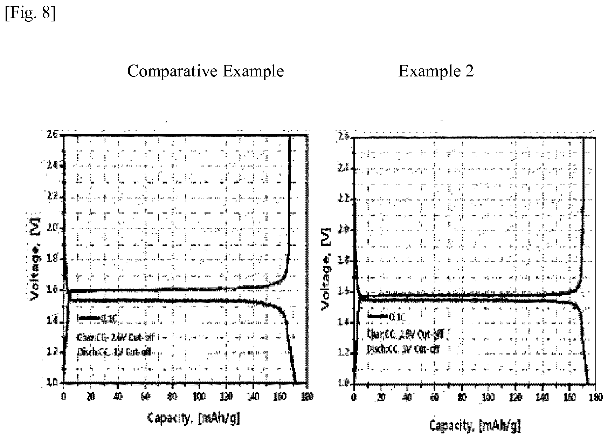

In order to evaluate electrochemical characteristics of test cells respectively containing the lithium titanium composite oxides of Preparation Examples 1, 2, and the comparative example, an electrochemical analysis apparatus (TOSCAT 3100, manufactured by Toyo System Co., Ltd.) was used. An initial charge-discharge characteristic at 0.1 C was measured, and the results were illustrated in FIG. 4 and FIG. 8. As illustrated in FIG. 4 and FIG. 8, it can be seen that in the test cells respectively containing the lithium titanium composite oxides of Preparation Examples 1 and 2, an initial capacity was increased by 4 to 5 mAh/g as compared with the comparative example.

### <Experimental Example 4> Evaluation of rate capability

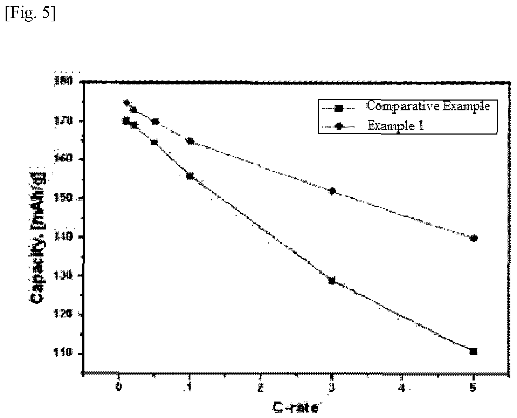

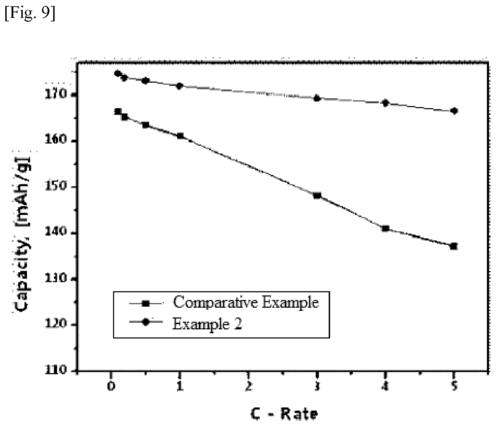

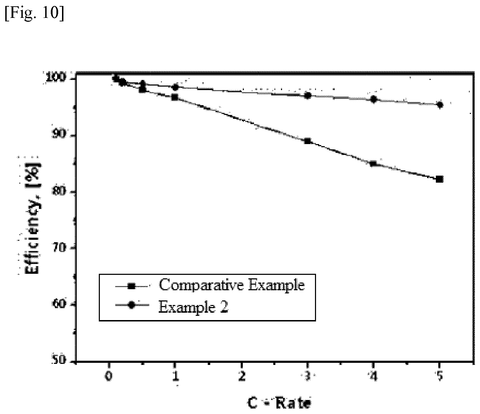

A charge-discharge test was carried out at a current density of 0.2 mA/cm² in a range of 0.1 C to 5 C. The results were illustrated in FIG. 5, FIG. 9, FIG. 10, and Table 1 below.

**[Table 1]**

| Sample | Unit | 0.1 C | | 0.2 C | 0.5 C | 1.0 C | 3.0 C | 5.0 C |
|---|---|---|---|---|---|---|---|---|
| | | Char | Disch | Disch | Disch | Disch | Disch | Disch |
| Comparative Example | mAh/g | 173.3 | 170.0 | 168.8 | 164.4 | 155.5 | 129.1 | 110.7 |
| | Effi (%) | 98.09 | | 99.29 | 96.70 | 91.47 | 75.94 | 65.11 |
| Preparation Example 1 | Ah/g | 177.5 | 174.7 | 173.0 | 169.9 | 164.8 | 152.0 | 139.7 |
| | Effi (%) | 98.42 | | 99.02 | 97.25 | 94.33 | 67.00 | 79.96 |

As illustrated in Table 1, FIG. 5, FIG. 9, and FIG. 10, it can be seen that in the case of the test cells respectively containing the lithium titanium composite oxides doped with a dissimilar metal according to Examples of the present invention, a rate capability was improved by 10% or more and particularly, a high-rate charge-discharge characteristic was further improved, as compared with the test cell containing the lithium titanium composite oxide of the comparative example.

### <Example 1> Preparation of dry ground lithium titanium composite oxide doped with Zr

The lithium titanium composite oxide doped with Zr as a dissimilar metal prepared according to Preparation Example 2 was dry ground with a jet air mill. Thus, a ground lithium titanium composite oxide doped with Zr was prepared.

### <Experimental Example 5> Measurement of particle size and SEM

A particle size and an SEM image of the dry ground lithium titanium composite oxide doped with Zr as a dissimilar metal prepared according to Example 1 were measured. The results were illustrated in Table 2 below and FIG. 11.

**[Table 2]**

| No. | Particle size | | | |
|---|---|---|---|---|
| | D10 | D50 | D90 | Dmax |
| | [µm] | [µm] | [µm] | [µm] |
| #1 | 0.42 | 0.95 | 3.11 | 69.18 |
| #2 | 0.45 | 1.02 | 2.67 | 7.58 |
| #3 | 0.44 | 0.99 | 2.74 | 30.20 |
| #4 | 0.45 | 1.08 | 3.74 | 30.20 |
| #5 | 0.44 | 1.01 | 3.45 | 39.81 |
| #6 | 0.45 | 1.02 | 2.67 | 6.60 |
| #7 | 0.46 | 1.07 | 2.98 | 8.71 |
| #8 | 0.46 | 1.02 | 2.52 | 7.58 |
| #9 | 0.44 | 0.94 | 2.17 | 6.60 |
| #10 | 0.44 | 0.99 | 3.14 | 104.71 |
| #11 | 0.45 | 1.02 | 2.87 | 10.00 |
| #12 | 0.40 | 0.84 | 2.03 | 39.81 |
| #13 | 0.47 | 1.35 | 19.71 | 60.25 |
| #14 | 0.45 | 0.85 | 1.65 | 3.31 |

It can be seen from Table 2 and FIG. 11 that the lithium titanium composite oxide doped with Zr as a dissimilar metal was dry ground after calcination so as to have D₅₀ in a range of 0.7 µm to 1.5 µm.

According to a preparation method of a lithium titanium composite oxide doped with a dissimilar metal, the preparation method and a lithium titanium composite oxide doped with a dissimilar metal prepared by the preparation method of the present invention, a dissimilar metal is mixed, ground, and spray-dried, so that the dissimilar metal can be doped on a surface of the lithium titanium composite oxide at the same time when sizes of primary particles can be finely controlled as compared with a conventional lithium titanium composite oxide. Thus, it is possible to provide a battery having high initial charge-discharge efficiency and a high rate capability.

## Claims

1. A preparation method of a lithium titanium composite oxide doped with a dissimilar metal, the preparation method comprising the steps:
i) mixing a lithium-containing compound, a titanium oxide, and a dissimilar metal-containing compound at a stoichiometric ratio in a solid-state;
ii) preparing slurry by dispersing the solid-state mixture of the step i) in a solvent and wet grinding the solid-state mixture until an average particle diameter come to be 0.3 µm to 0.8 µm;
iii) spray-drying the slurry;
iv) calcining the spray-dried slurry; and
v) grinding the particles calcined in the step iv) to obtain the lithium titanium composite oxide doped with a dissimilar metal,
wherein:
the dissimilar metal is Na or Zr; and
the ground particles obtained in step v) have a D50 in a range of 0.7 µm to 1.5 µm.

2. The preparation method of a lithium titanium composite oxide doped with a dissimilar metal according to claim 1,
wherein the dissimilar metal Na containing compound is a sodium carbonate, a sodium hydroxide, or a mixture of the sodium carbonate and the sodium hydroxide, or
wherein the dissimilar metal Zr containing compound is Zr(OH)₄, ZrO₂, or a mixture thereof.

3. The preparation method of a lithium titanium composite oxide doped with a dissimilar metal according to claim 1,
wherein the titanium oxide is an anatase type or a hydrous titanium oxide, or
wherein the lithium-containing compound is a lithium hydroxide or a lithium carbonate.

4. The preparation method of a lithium titanium composite oxide doped with a dissimilar metal according to claim 1, wherein the wet grinding in the step ii) is carried out using water as a solvent and zirconia beads at 2000 to 4000 rpm.

5. The preparation method of a lithium titanium composite oxide doped with a dissimilar metal according to claim 1, wherein the spray-drying the slurry in the step iii) is carried out under condition that input hot air temperature is in a range of 250 to 300°C and a exhausted hot air temperature is in a range 100 to 150°C.

6. The preparation method of a lithium titanium composite oxide doped with a dissimilar metal according to claim 1,wherein the calcining in the step iv) is carried out by calcining the spray-dried slurry of the step iii) under an air atmosphere at 700 to 800°C for 5 hours to 10 hours.

7. The preparation method of a lithium titanium composite oxide doped with a dissimilar metal according to claim 1, wherein step v) comprises grinding the particles calcined in the step iv) with a jet air mill.

8. A lithium titanium composite oxide doped with a dissimilar metal comprised of secondary particles formed by agglomeration of primary particles, in which the diameters of the primary particles are in a range of 0.2 µm to 0.6 µm, and the dissimilar metal is Na or Zr,
wherein the secondary particles are ground to have a D₅₀ in a range of 0.7 µm to 1.5 µm.

9. The lithium titanium composite oxide doped with a dissimilar metal according to claim 8,
wherein the lithium titanium composite oxide doped with a dissimilar metal is doped with the dissimilar metal in an amount of more than 0 wt.% to 5 wt.% or less.

10. The lithium titanium composite oxide doped with a dissimilar metal according to claim 8,
wherein the lithium titanium composite oxide doped with a dissimilar metal has a spinel structure.

11. The lithium titanium composite oxide doped with a dissimilar metal according to claim 8,
wherein in the lithium titanium composite oxide doped with a dissimilar metal, a peak intensity of a rutile titanium dioxide detected at 2θ in a range of 25° to 30° is 0 to 0.5.

12. A cathode for lithium rechargeable battery comprising the lithium titanium composite oxide doped with a dissimilar metal according to claim 8.

13. An anode for lithium rechargeable battery comprising the lithium titanium composite oxide doped with a dissimilar metal according to claim 8.

14. A lithium rechargeable battery containing the cathode according to claim 12 or the anode according to claim 13.

## Patentansprüche

1. Herstellungsverfahren eines Lithium-Titan-Verbundoxids, das mit einem ungleichen Metall dotiert ist, das Herstellungsverfahren umfassend die folgenden Schritte:
i) Mischen einer lithiumhaltigen Verbindung, eines Titanoxids und einer Verbindung, die ein ungleiches Metall enthält, in einem stöchiometrischen Verhältnis in einem festen Zustand;
ii) Herstellen einer Aufschlämmung durch Dispergieren des Feststoffgemischs des Schritts i) in einem Lösungsmittel und Nassmahlen des Feststoffgemischs, bis ein durchschnittlicher Teilchendurchmesser von 0,3 µm bis 0,8 µm erreicht ist;
iii) Sprühtrocknen der Aufschlämmung;
iv) Kalzinieren der sprühgetrockneten Aufschlämmung; und
v) Mahlen der in dem Schritt iv) kalzinierten Teilchen, um das Lithium-Titan-Verbundoxid zu erlangen, das mit einem ungleichen Metall dotiert ist,
wobei:
das ungleiche Metall Na oder Zr ist; und
die in Schritt v) erlangten gemahlenen Partikel eine D50 in einem Bereich von 0,7 µm bis 1,5 µm aufweisen.

2. Herstellungsverfahren eines Lithium-Titan-Verbundoxids, das mit einem ungleichen Metall dotiert ist, nach Anspruch 1,
wobei die ungleiche Metall-Na-haltige Verbindung ein Natriumcarbonat, ein Natriumhydroxid oder ein Gemisch aus dem Natriumcarbonat und dem Natriumhydroxid ist, oder
wobei die ungleiche Metall-Zr-haltige Verbindung Zr(OH)₄, ZrO₂ oder ein Gemisch davon ist.

3. Herstellungsverfahren eines Lithium-Titan-Verbundoxids, das mit einem ungleichen Metall dotiert ist, nach Anspruch 1,
wobei das Titanoxid ein Anatas-Typ oder ein wasserhaltiges Titanoxid ist, oder
wobei die lithiumhaltige Verbindung ein Lithiumhydroxid oder ein Lithiumcarbonat ist.

4. Herstellungsverfahren eines Lithium-Titan-Verbundoxids, das mit einem ungleichen Metall dotiert ist, nach Anspruch 1, wobei das Nassmahlen in dem Schritt ii) unter Verwendung von Wasser als Lösungsmittel und Zirkoniumdioxidperlen bei 2000 bis 4000 U/min durchgeführt wird.

5. Herstellungsverfahren eines Lithium-Titan-Verbundoxids, das mit einem ungleichen Metall dotiert ist, nach Anspruch 1, wobei das Sprühtrocknen der Aufschlämmung in dem Schritt iii) unter einer Bedingung durchgeführt wird, dass die Temperatur von zugeführter Heißluft in einem Bereich von 250 bis 300 °C und die Temperatur der abgeführten Heißluft in einem Bereich von 100 bis 150 °C ist.

6. Herstellungsverfahren eines Lithium-Titan-Verbundoxids, das mit einem ungleichen Metall dotiert ist, nach Anspruch 1, wobei das Kalzinieren in dem Schritt iv) durch Kalzinieren der sprühgetrockneten Aufschlämmung aus dem Schritt iii) unter einer Luftatmosphäre bei 700 bis 800 °C über 5 Stunden bis 10 Stunden durchgeführt wird.

7. Herstellungsverfahren eines Lithium-Titan-Verbundoxids, das mit einem ungleichen Metall dotiert ist, nach Anspruch 1, wobei Schritt v) ein Mahlen der in dem Schritt iv) kalzinierten Teilchen mit einer Luftstrahlmühle umfasst.

8. Lithium-Titan-Verbundoxid, das mit einem ungleichen Metall dotiert ist, bestehend aus Sekundärteilchen, die durch Agglomeration von Primärteilchen gebildet werden, wobei die Durchmesser der Primärteilchen in einem Bereich von 0,2 µm bis 0,6 µm sind und das ungleiche Metall Na oder Zr ist,
wobei die Sekundärteilchen gemahlen werden, sodass sie eine D₅₀ in einem Bereich von 0,7 µm bis 1,5 µm aufweisen.

9. Lithium-Titan-Verbundoxid, das mit einem ungleichen Metall dotiert ist, nach Anspruch 8,
wobei das Lithium-Titan-Verbundoxid, das mit einem ungleichen Metall dotiert ist, mit dem ungleichen Metall in einer Menge von mehr als 0 Gew.-% bis 5 Gew.-% oder weniger dotiert ist.

10. Lithium-Titan-Verbundoxid, das mit einem ungleichen Metall dotiert ist, nach Anspruch 8,
wobei das mit einem ungleichen Metall dotierte Lithium-Titan-Verbundoxid eine Spinell-Struktur aufweist.

11. Lithium-Titan-Verbundoxid, das mit einem ungleichen Metall dotiert ist, nach Anspruch 8,
wobei in dem Lithium-Titan-Verbundoxid, das mit einem ungleichen Metall dotiert ist, eine Peak-Intensität eines Rutil-Titandioxids, detektiert bei 2θ in einem Bereich von 25° bis 30°, 0 bis 0,5 ist.

12. Kathode für eine wiederaufladbare Lithiumbatterie, umfassend das Lithium-Titan-Verbundoxid, das mit einem ungleichen Metall dotiert ist, gemäß Anspruch 8.

13. Anode für eine wiederaufladbare Lithiumbatterie, umfassend das Lithium-Titan-Verbundoxid, das mit einem ungleichen Metall dotiert ist, gemäß Anspruch 8.

14. Wiederaufladbare Lithiumbatterie, die die Kathode nach Anspruch 12 oder die Anode nach Anspruch 13 enthält.

## Revendications

1. Procédé de préparation d'un oxyde composite de lithium titane dopé avec un métal de nature différente, le procédé de préparation comprenant les étapes suivantes :
i) le mélange d'un composé contenant du lithium, d'un oxyde de titane, et d'un composé contenant un métal de nature différente à un rapport stœchiométrique dans un état solide ;
ii) la préparation d'une suspension par dispersion du mélange à l'état solide de l'étape i) dans un solvant et broyage en voie humide du mélange à l'état solide jusqu'à ce qu'un diamètre de particule moyen soit de 0,3 µm à 0,8 µm ;
iii) le séchage par pulvérisation de la suspension ;
iv) la calcination de la suspension séchée par pulvérisation ; et
v) le broyage des particules calcinées dans l'étape iv) pour obtenir l'oxyde composite de lithium titane dopé avec un métal de nature différente,
dans lequel :
le métal de nature différente est Na ou Zr ; et
les particules broyées obtenues dans l'étape v) ont un D50 dans une plage allant de 0,7 µm à 1,5 µm.

2. Procédé de préparation d'un oxyde de composite de lithium titane dopé avec un métal de nature différente selon la revendication 1,
dans lequel le composé contenant le métal de nature différente Na est un carbonate de sodium, un hydroxyde de sodium, ou un mélange du carbonate de sodium et de l'hydroxyde de sodium, ou
dans lequel le composé contenant le métal de nature différente Zr est Zr(OH)₄, ZrO₂, ou un mélange de ceux-ci.

3. Procédé de préparation d'un oxyde composite de lithium titane dopé avec un métal de nature différente selon la revendication 1,
dans lequel l'oxyde de titane est un type anatase ou un oxyde de titane hydraté, ou
dans lequel le composé contenant du lithium est un hydroxyde de lithium ou un carbonate de lithium.

4. Procédé de préparation d'un oxyde composite de lithium titane dopé avec un métal de nature différente selon la revendication 1, dans lequel le broyage en voie humide dans l'étape ii) est réalisé en utilisant de l'eau en tant que solvant et des billes de zircone à 2 000 à 4 000 tours par minute.

5. Procédé de préparation d'un oxyde composite de lithium titane dopé avec un métal de nature différente selon la revendication 1, dans lequel le séchage par pulvérisation de la suspension dans l'étape iii) est réalisé dans des conditions telles qu'une température de l'air chaud entrant soit dans une plage allant de 250 à 300 °C et qu'une température de l'air chaud évacué soit dans une plage allant de 100 à 150 °C.

6. Procédé de préparation d'un oxyde composite de lithium titane dopé avec un métal de nature différente selon la revendication 1, dans lequel la calcination dans l'étape iv) est réalisée par calcination de la suspension séchée par pulvérisation de l'étape iii) sous une atmosphère d'air à 700 à 800 °C pendant 5 heures à 10 heures.

7. Procédé de préparation d'un oxyde composite de lithium titane dopé avec un métal de nature différente selon la revendication 1, dans lequel l'étape v) comprend le broyage des particules calcinées dans l'étape iv) avec un broyeur à jet d'air.

8. Oxyde composite de lithium titane dopé avec un métal de nature différente composé de particules secondaires formées par agglomération de particules primaires, dans lequel les diamètres des particules primaires sont dans une plage allant de 0,2 µm à 0,6 µm, et le métal de nature différente est Na ou Zr,
dans lequel les particules secondaires sont broyées pour avoir un D₅₀ dans une plage allant de 0,7 µm à 1,5 µm.

9. Oxyde composite de lithium titane dopé avec un métal de nature différente selon la revendication 8,
dans lequel l'oxyde composite de lithium titane dopé avec un métal de nature différente est dopé avec le métal de nature différente en une quantité de plus de 0 % en poids à 5 % en poids ou moins.

10. Oxyde composite de lithium titane dopé avec un métal de nature différente selon la revendication 8,
dans lequel l'oxyde composite de lithium titane dopé avec un métal de nature différente a une structure spinelle.

11. Oxyde composite de lithium titane dopé avec un métal de nature différente selon la revendication 8,
dans lequel, dans l'oxyde composite de lithium titane dopé avec un métal de nature différente, une intensité de pic d'un dioxyde de titane rutile détecté à 2θ dans une plage allant de 25° à 30° est de 0 à 0,5.

12. Cathode pour batterie rechargeable au lithium comprenant l'oxyde composite de lithium titane dopé avec un métal de nature différente selon la revendication 8.

13. Anode pour batterie rechargeable au lithium comprenant l'oxyde composite de lithium titane dopé avec un métal de nature différente selon la revendication 8.

14. Batterie rechargeable au lithium contenant la cathode selon la revendication 12 ou l'anode selon la revendication 13.
